# EUROPÄISCHE PATENTSCHRIFT

(11) **EP 0 718 327 B1**
(45) Veröffentlichungstag und Bekanntmachung des Hinweises auf die Patenterteilung: **21.06.2000**
(21) Anmeldenummer: 95119541.1
(22) Anmeldetag: 12.12.1995
(51) Int. Cl.: C08F 220/14, C09C 3/10

(54) **Universell verträgliche Pigmentdispergatoren**
Universal compatible pigment dispersants
Dispersants pour pigments à compatibilité universelle

(30) Priorität: 20.12.1994 DE 4445498
(43) Veröffentlichungstag der Anmeldung: 26.06.1996
(73) Patentinhaber: Röhm GmbH, 64293 Darmstadt (DE)
(72) Erfinder: May, Michael, Dr., D-64347 Griesheim (DE); Höss, Werner, D-64150 Heusenstamm (DE); Markert, Gerhard, Dr., D-64372 Ober-Ramstadt (DE); Siol, Werner, Dr., D-64297 Darmstadt (DE)

(56) Entgegenhaltungen:
- EP-A1- 0 022 746
- EP-A1- 0 061 833
- EP-A2- 0 130 576
- DE-A1- 3 248 602
- US-A- 4 166 882
- US-A- 4 302 561

## Beschreibung

### Gebiet der Erfindung

Die Erfindung betrifft Copolymerisate P geeignet als Dispergiermittel für Farbstoffe und/oder Pigmente in Kunststoffen, wobei P eine universelle Polymerverträglichkeit aufweist.

### Stand der Technik

Verteiler für Farbstoffe oder Pigmente in Kunststoffen, bestehend aus Copolymerisaten, die Acrylat- oder Methacrylat-Comonomereinheiten enthalten, sind bekannt.

In EP-A 33 213 werden Copolymerisate beschrieben, die als Comonomereinheiten substituierte Vinylaromaten und/oder (Meth)acrylate, eine polymerisierbare heterocyclische Verbindung mit einem N- und einem O-Atom im Heterocyclus sowie gegebenenfalls eine α,β-ungesättigte Carbonsäure enthalten. Solche Copolymerisate wirken als Dispergiermittel für anorganische oder organische Pigmente und Farbstoffe in Lackzubereitungen, wobei die Verträglichkeit mit den die Lacke aufbauenden Harzen, wie beispielsweise Alkydharzen, Epoxidharzen oder Aminoplastharzen, hervorgehoben wird. Eine Verbesserung des Dispergiervermögens wird bei Copolymerisaten festgestellt, wenn als α,β-ungesättigte Säure (Meth)acrylsäure in Anteilen von 0,2 bis 5 Gew.-% verwendet wird.

EP-A 252 798 umfaßt verträgliche Pigmentdispergiermittel für Streichfarben, Lacke, Tinten und Klebstoffe bestehend aus Telomeren oder Cotelomeren, aufgebaut aus Acryl-und/oder Methacrylsäureestern, wobei die Telomeren im allgemeinen mittlere Molekulargewichte M_{w} zwischen 10² und 5 x 10³ Dalton aufweisen.
In EP-A 340 976 werden unter anderem Pigmentdispersionen beansprucht, enthaltend 1 bis 50 Gew.-% eines (Meth)acryl-Polymerisats als Pigmentdispergiermittel mit Monomereinheiten, die primäre Aminogruppen an einem tertiären Kohlenstoffatom aufweisen, 10 bis 90 Gew.-% eines Pigments, sowie eine Flüssigkeit, in der Pigment und Pigmentdispergiermittel dispergiert sind. Solche Pigmentzubereitungen werden vorzugsweise in flüssigen Beschichtungsmitteln eingesetzt.
Gegenstand von EP-A 311 157 sind polymere Dispergiermittel für Pigmente oder Farbstoffe, bestehend aus 0 bis 80 Mol.-% Vinylaromaten, 0 bis 70 Mol.-% Alkyl(meth)acrylaten, 5 bis 50 Mol.-% Monomereinheiten mit einer heterocyclischen Gruppe, die mindestens ein basisches Ringstickstoffatom aufweist, 0 bis 10 Mol.-% vernetzenden Monomereinheiten, sowie 0 bis 20 Mol.-% weiter copolymerisierbaren Monomereinheiten. Solche Polymere weisen eine gute Verträglichkeit mit polymeren Bindern für Beschichtungsmittel oder Tinten auf, insbesondere mit Bindern auf Polyacrylat- und Alkydharz-Basis.
EP-A 22 746 beschreibt Copolymerisate aus Alkyl- oder Cycloalkylmethacrylaten mit 4 bis 6 Kohlenstoffatomen im Esterrest und Aminoalkyl(meth)acrylaten als Pigmentdispergiermittel, wobei die Mischungen aus Pigment und Pigmentdispergator mit verschiedenen Substraten, wie Anstrichfarben, Tinten und Kunststoffen verträglich sind. Die Mischung von Copolymerisat und Pigment wird durch Schmelzmischen bzw. Mischen in einem Lösungsmittel, das danach wieder abgezogen wird, bewerkstelligt.

### Aufgabe und Lösung

Allen oben beschriebenen Pigmentdispergiermitteln des Standes der Technik ist gemeinsam, daß die dispergierenden Polymerisate Cycloalkyl(meth)acrylat als Comonomereinheit enthalten können. Aus EP-A 321 878 (= US-A 4,906,699, 5,219, 935) ist bekannt, daß Copolymerisate aus Methylmethacrylat und Cyclohexylmethacrylat auf vernetzten Elastomerphasen gepfropft, als Universalschlagzähmodifizierungsmittel für verschiedene Kunststoffe eingesetzt werden. Das Prinzip der Universalschlagzähmodifizierung basiert auf dem Prinzip, daß Copolymerisate aus 50 bis 95 Gew.-% Methylmethacrylat und 5 bis 50 Gew.-% Cycloalkyl(meth)acrylat mit 5 bis 7 Kohlenstoffatomen im Ring mit einer Vielzahl von Kunststoffen thermodynamisch verträglich sind, d.h. daß solche Copolymerisate mit den Kunststoffen transparente Polymerlegierungen bilden. Eine solche universelle Verträglichkeit mit Kunststoffen wird auch für die Pigmentdispergiermittel nach EP-A 22 746 beansprucht. Definiert man den Terminus "Verträglichkeit" mit thermodynamischer Polymerverträglichkeit, so ist diese Behauptung jedoch für einige wichtige Kunststoffe wie beispielsweise Styrol-Acrylnitril-Copolymerisate, Methylmethacrylat-Copolymerisate oder Polycarbonat nicht zutreffend, mit denen die in EP-A 22 746 beanspruchten Pigmentdispergiermittel thermodynamisch nicht verträglich sind.

Aufgabe der vorliegenden Erfindung war es nun, auf Basis der Lehre der EP-A 321 878 Pigmentdispergiermittel aufzufinden, die mit einem breiten Spektrum an Standardkunststoffen verträglich sind und die eine ausreichende Haftung an der Oberfläche der Farbpigmentteilchen aufweisen bzw. in denen molekulare Farbstoffe gut löslich sind. Durch die Verträglichkeit zwischen Kunststoff und Pigmentdispergiermittel soll gewährleistet werden, daß optische und mechanische Eigenschaften des Kunststoffs weitestgehend unbeeinflußt bleiben.
Überraschenderweise wurde gefunden, daß sich Copolymerisate P bestehend aus den Monomereinheiten:
(m1) 30 bis 94,5 Gew.-% Methylmethacrylat,
(m2) 5 bis 50 Gew.-% (Meth)acrylat der Formel I: 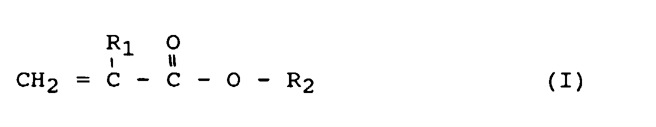 wobei:
   - R₁: für Wasserstoff oder Methyl und
   - R₂: für einen gegebenenfalls substituierten Cycloalkylrest mit 5 bis 7 Ringkohlenstoffatomen
   stehen,
(m3) 0,5 bis 20 Gew.-% (Meth)acrylverbindung der Formel II: 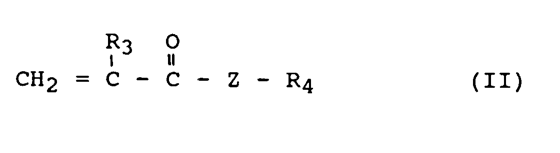 wobei:
   - R₃: für Wasserstoff oder Methyl,
   - R₄: für einen Substituenten, enthaltend mindestens ein Sauerstoff- und/oder ein Stickstoffatom und
   - Z: für O, NH oder NR₅ mit R₅ = Alkyl mit 1 bis 6 Kohlenstoffatomen oder R₅ = R₄
   stehen, sowie gegebenenfalls
(m4) 0,5 bis 30 Gew.-% Methacrylat der Formel III 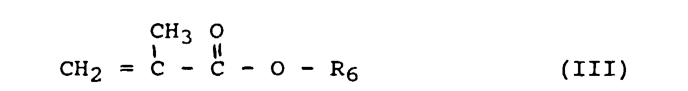 worin:
   - R₆: für einen gegebenenfalls verzweigten und/oder substituierten Alkylrest mit 3 bis 24 Kohlenstoffatomen
   steht und
wobei sich die Comonomeren (m1), (m2) und (m3) und gegebenenfalls (m4) zu 100 Gew.-% ergänzen, hervorragend eignen als Pigment- und Farbstoffdispergiermittel für ein breites Spektrum an Standardkunststoffen, wie beispielsweise Polymethylmethacrylat (PMMA), Polystyrol (PS), Poly-α-Methylstyrol (P-α-MS), Copolymerisate enthaltend mindestens 50 Gew.-% Methylmethacrylat, Styrol oder α-Methylstyrol, Styrol-Acrylnitril-Copolymerisate (SAN), Acrylnitril-Butadien-Styrol-Terpolymerisate (ABS), Polyolefine wie Polyethylen oder Polypropylen, Polycarbonat (PC), Polyestercarbonate, Polyvinylchlorid (PVC), Chlorkautschuk oder Polyvinylidenfluorid (PVDF).

In einer bevorzugten Ausführungsform der Erfindung ist das Comonomere (m4) in Mengen von 1 bis 25 Gew.-% im Copolymerisat P anwesend.
Weiterhin bevorzugt sind Copolymerisate P mit mittleren Molekulargewichten M_{w} zwischen 5 x 10³ und 5 x 10⁴ Dalton entsprechend reduzierten Viskositäten nach DIN 51 562 in Chloroform bei 25 Grad C von 5 bis 30 ml/g (zur Bestimmung von M_{w} vgl. beispielsweise H.F. Mark et al. Encyclopedia of Polymer Science and Technology, 2nd Ed., Vol. 10, Seiten 1ff, John Wiley, New York, 1989).
Bevorzugte Monomere (m3) im Copolymerisat P sind Dialkylaminoalkyl(meth)acrylate, Dialkylaminoalkyl(meth)-acrylamide, Alkoxy(meth)acrylate sowie Alkyl(meth)acrylate und -(meth)acrylamide mit Heterocyclen, die mindestens ein Sauerstoff- und/oder Stickstoffatom aufweisen, als Substituenten am Alkylester- oder Alkylamid-Rest.

### Durchführung der Erfindung

### Die Monomeren (m2), (m3) und (m4)

Die Monomeren (m2) sind bekannt: beispielsweise sind dies Cyclopentyl(meth)acrylat, Cyclohexyl(meth)acrylat oder 4-Methylcyclohexyl(meth)acrylat.
Als Monomere (m3) finden beispielsweise Verwendung: Dialkylaminoalkyl(meth)acrylate, wie z.B. N,N-Dimethylaminopropyl(meth)acrylat, N,N-Dimethylaminobutyl(meth)acrylat, N,N-Diethylaminopropyl(meth)acrylat, N,N-Diethylaminoethyl(meth)acrylat oder vorzugsweise N,N-Dimethylaminoethyl(meth)acrylat, Dialkylaminoalkyl(meth)acrylamide, wie z.B. N,N-Diethylaminoethyl(meth)acrylamid, N,N-Dimethylaminopropyl(meth)acrylamid, N,N-Diethylaminobutyl(meth)acrylamid oder vorzugsweise N,N-Dimethylaminoethyl(meth) acrylamid, Alkyl(meth)acrylate oder -(meth)acrylamide mit Heterocyclen als Substituenten, die mindestens ein Stickstoff- und/oder Sauerstoffatom im Heterocyclus aufweisen, wie beispielsweise Furfuryl(meth)acrylat, Tetrahydrofurfuryl(meth)acrylat, 2,2,6,6-Tetramethylpiperidinyl(meth)acrylat, 2-N-Morpholinoethyl(meth)acrylat, 2-N-Pyridinylethyl(meth)acrylat oder 2-N-Piperazinylethyl(meth)acrylat sowie N-(4-Morpholinomethyl)(meth)acrylamid, N-(1-Piperidinylmethyl)(meth)acrylamid, N-Methacryloylpyrrolidon-2, N-(Methacrylamidomethyl)-pyrrolidon, N-(Acrylamidomethyl)pyrrolidon, N-(Methacrylamidomethyl)-caprolactam, N-(Acrylamidomethyl)-caprolactam oder 2-N-Pyridinylethyl(meth)acrylamid sowie weitere, beispielsweise in EP-A 311 157 aufgeführte, heterocyclische Verbindungen, die eine (Meth)acrylat- bzw. eine (Meth)acrylamid-Gruppe aufweisen, Alkoxy(meth)-acrylate wie beispielsweise 2-Ethoxyethyl(meth)acrylat, 2-Methoxyethyl(meth)acrylat, 2-Butoxylethyl(meth)acrylat oder 2-(Ethoxyethoxy)ethyl(meth)acrylat. Monomere (m4) sind beispielsweise: n-Propylmethacrylat, iso-Propylmethacrylat, iso-Butylmethacrylat, n-Pentylmethacrylat, n-Hexylmethacrylat, 2-Ethylhexylmethacrylat, n-Octylmethacrylat, n-Decylmethacrylat, n-Dodecylmethacrylat, n-Tetradecylmethacrylat, n-Hexadecylmethacrylat, n-Octadecylmethacrylat, n-Eicosylmethacrylat sowie bevorzugt n-Butylmethacrylat.

### Herstellung der Copolymerisate P

Die Copolymerisate P werden in an sich bekannter Weise aus den Monomeren (m1), (m2), (m3) und gegebenenfalls (m4) durch radikalische, anionische oder Gruppentransfer-Polymerisation gebildet (vgl. hierzu beispielsweise H. Rauch-Puntigam, Th. Völker, Acryl- und Methacrylverbindungen, Springer, Heidelberg, 1967; Houben-Weyl, 4. Aufl., Band XIV/1, Seiten 1010ff, Thieme, Stuttgart, 1961). Die Polymerisation der Copolymerisate P kann in Masse, Suspension, Emulsion oder Lösung durchgeführt werden.
Bei der radikalischen Polymerisation werden vorzugsweise als Initiatoren Peroxidverbindungen, besonders organische Peroxide, wie beispielsweise Dibenzoylperoxid oder Lauroylperoxid, Azoverbindungen, wie beispielsweise Azodiisobutyronitril oder Redox-Initiatoren in Mengen von 0,01 bis 5 Gew.-% bezogen auf die Monomeranteile eingesetzt.
Die die Polymerisation auslösenden Radikale können auch durch hochenergetische Strahlung erzeugt werden.
Als Molekulargewichtsregler kommen beispielsweise herkömmliche Schwefelverbindungen, wie beispielsweise Mercaptoverbindungen in Mengen von 0,2 bis 8 Gew.-% bezogen auf die Monomeranteile in Frage. Im allgemeinen liegen die mittleren Molekulargewichte M_{w} der Copolymerisate P zwischen 5 x 10³ und 5 x 10⁴ Dalton, vorzugsweise zwischen 10⁴ und 3 x 10⁴ Dalton.
Die Copolymerisate P bestehen zu 30 bis 94,5 Gew.-%, vorzugsweise 45 bis 88 Gew.-%, bezogen auf die gesamten Monomeren aus Methylmethacrylat-Einheiten, zu 5 bis 50 Gew.-%, vorzugsweise 10 bis 45 Gew.-% aus Monomereinheiten (m2) sowie 0,5 bis 20 Gew.-%, vorzugsweise zu 2 bis 15 Gew.-% aus Monomereinheiten (m3). In einer besonders bevorzugten Ausführungsform der Erfindung enthalten die Copolymerisate P noch 0,5 bis 30 Gew.-% vorzugsweise 1 bis 25 Gew.-% Monomereinheiten (m4), die im allgemeinen das Schmelzfließverhalten sowie die Verträglichkeit der Copolymerisate P mit den einzufärbenden Standardkunststoffen günstig beeinflussen und somit die Compoundierbarkeit der Pigmente und der Pigmentdispergiermittel P bzw. der Gemische verbessern.

Die Copolymerisate P bilden mit einer Vielzahl von Standard-Kunststoffen SK, wie beispielsweise Polymethylmethacrylat (PMMA), Copolymerisate aus Methylmethacrylat und gegebenenfalls substituierten Styrolen, Polystyrol (PS), Poly-α-Methylstyrol (P-α-MS), Styrol-Acrylnitril-Copolymerisate (SAN), Acrylnitril-Butadien-Styrol-Terpolymerisate, Polyolefine, wie beispielsweise Polyethylen oder Polypropylen, Polycarbonat (PC), Polyestercarbonat, Polyvinylchlorid (PVC), Chlorkautschuk oder Polyvinylidenfluorid (PVDF) verträgliche Polymermischungen PM, deren Charakterisierung nach anerkannten Kriterien erfolgt (vgl. hierzu beispielsweise Kirk-Othmer, Encyclopedia of Chemical Technology, Vol. 18, Seiten 457 bis 460, Wiley Interscience, New York, 1981, J. Brandrup, E.H. Immergut, Polymer Handbook, 2nd. Ed., Kap. III, Seiten 211ff, Wiley Interscience, New York, 1975).
Bei den verträglichen Polymermischungen PM mit amorphen Kunststoffen SK beobachtet man einen Brechungsindex und eine einzige Glastemperatur, die zwischen den Glasübergangstemperaturen des Copolymerisats P und des Standardkunststoffs SK liegt. Als weiterer Hinweis auf die Verträglichkeit wird das Auftreten der LCST (Lower Critical Solution Temperature) herangezogen, deren Existenz auf dem Vorgang beruht, daß sich beim Erwärmen die bis dahin klare transparente Mischung in verschiedene Phasen auftrennt und optisch trübe wird, was einen eindeutigen Beweis dafür darstellt, daß die ursprüngliche Polymermischung aus einer einzigen, im thermodynamischen Gleichgewicht befindlichen Phase bestand (vgl. hierzu beispielsweise D.R. Paul, Polymer Blend & Mixtures, Seiten 1ff, Martinus Nijhoff Publishers, Dordrecht, Bosten, 1985).

### Die Pigmente und Farbstoffe

Als Pigmente in den erfindungsgemäßen Zubereitungen, bestehend aus Pigment und Copolymerisat P, kommen anorganische oder organische Pigmente in Frage. Geeignete anorganische Pigmente sind beispielsweise: Aluminiumoxidhydrat, Antimonoxid, Bariumsulfat, Bronzepulver, Cadmiumoxid, Cadmiumsulfid, Calciumcarbonat, Calciumsilikat, Bleisulfat, Bleichromat, Bleioxid, Bleichromatmolybdat, Chromoxide, Chromantimontitanat, Cobaltaluminat, Eisenoxide, Graphit, Quecksilberoxid, Quecksilbersulfid, Nickeltitanat, Siliciumdioxid, Siliciumchromat, Strontiumchromat, Magnesiumsilicat, Titandioxid, Ultramarinblau, Zinkoxid, Zinkchromat, Zinksulfid oder Zirkondioxid (vgl. hierzu beispielsweise: Kirk-Othmer, Encyclopedia of Chemical Technology, 3rd. Ed., Vol. 17, Seiten 788 bis 838, Wiley Interscience, New York, 1982, Ullmanns Encyclopädie der Technischen Chemie, 4. Aufl., Vol. 18, Seiten 545 - 660, Verlag Chemie, Weinheim, 1979).

Beispiele für organische Pigmente sind: Phthalocyaninblau, Phthalocyaningrün, Malachitgrün, Naphtholrot, Toluidinrot, Pyrazolonrot, Rhodamin, Alizarin, Hansagelb, Antrachinone, Dianisidin-Orange (vgl. hierzu: Kirk-Othmer, loc.cit., Vol. 17, Seiten 838 bis 871; Ullmanns Enzyklopädie der Technischen Chemie, 4. Aufl., Vol. 18, Seiten 661 - 695, Verlag Chemie, Weinheim, 1979).
Von den Pigmenten, die in mehr oder minder großen, mitunter kristallähnlichen Agglomeraten vorliegen und die durch die Pigmentdispergatoren P in kleinere Agglomerate aufgebrochen werden, sind die Farbstoffe zu unterscheiden, die im allgemeinen molekular gelöst im Kunststoffsubstrat vorliegen. Jedoch ist die Löslichkeit vieler Farbstoffe in Standardkunststoffen schlecht bzw. ist die Farbintensität vieler Farbstoffe zu groß, so daß eine direkte Eindosierung der Farbstoffe in die Kunststoffschmelze nicht möglich ist. Auch hier eignen sich die erfindungsgemäßen Copolymerisate P als Farbstoffdispergatoren hervorragend. Beispiele für solche Farbstoffe sind: Azoverbindungen, Stilbenverbindungen, Carotinoidfarbstoffe, Di- und Triarylmethanverbindungen, Methin- und Polymethinverbindungen oder Thiazinverbindungen (vgl. hierzu: Kirk-Othmer, loc.cit., Vol. 8, Seiten 159 bis 212, Wiley Interscience, New York, 1979). Solche Farbstoffe werden im allgemeinen durch physikalische Wechselwirkungen, wie beispielsweise Wasserstoffbrückenbindungen oder dipolare Wechselwirkungen an das Copolymerisat P und/oder an den Standardkunststoff SK gebunden. Die optischen Eigenschaften solcher Farbstoffe werden durch Elektronenübergänge zwischen Molekülorbitalen bestimmt, während die optischen Eigenschaften von Pigmenten darüber hinaus von der Struktur der Pigmentteilchen beeinflußt werden. Die Pigmente behalten im Gegensatz zu den Farbstoffen während der Compoundierschritte die Primärteilchenform (Kristallite) unverändert bei.

### Die Mischungen M von Pigmenten und Farbstoffen mit den Copolymerisaten P

Die erfindungsgemäßen Mischungen M aus Pigmenten bzw. Farbstoffen mit dem Copolymerisat P werden mit konventionellen Mischmethoden, wie beispielsweise Schmelzemischen oder Mischen in einem Lösungsmittel, hergestellt.
Im allgemeinen enthalten die Mischungen MP aus Pigmenten und Copolymerisaten P 0,1 bis 95 Gew.-%, bevorzugt 0,2 bis 75 Gew.-%, besonders bevorzugt 0,5 bis 70 Gew.-% Pigment und den zu 100 Gew.-% ergänzenden Anteil an Copolymerisat P.
Die Mischungen MF aus Farbstoffen und Copolymerisaten P enthalten 0,05 bis 50 Gew.-%, bevorzugt 0,1 bis 25 Gew.-%, besonders bevorzugt 0,2 bis 15 Gew.-% Farbstoff und den zu 100 Gew.-% ergänzenden Anteil an Copolymerisat P.
Zur Herstellung der Mischungen MP oder MF werden zunächst die im allgemeinen pulverförmigen Pigmente oder Farbstoffe mit den im allgemeinen in Granulatform oder als Mahlgut vorliegenden Copolymerisaten P in langsam laufenden Mischaggregaten, wie beispielsweise Trommel-, Rhönrad- oder Doppelkammerpflugscharmischern vorgemischt. Die langsam laufenden Mischaggregate verursachen ein mechanisches Mischen, ohne daß in der Regel die Phasengrenzen aufgehoben werden (vgl. beispielsweise Ullmanns Enzyklopädie der technischen Chemie, 4. Aufl., Band 2, Seiten 282 bis 311, Verlag Chemie, Weinheim, New York, 1980). Solchermaßen hergestellte Vormischungen werden thermoplastisch aufbereitet unter homogenem Mischen der o.g. Mischungskomponenten in der Schmelze unter Verwendung von heizbaren Mischaggregaten bei den dafür geeigneten Temperaturen, beispielsweise zwischen 150 und 300 Grad C, in Knetern oder vorzugsweise in Extrudern, beispielsweise in Ein- oder Mehrschneckenextrudern oder gegebenenfalls in Extrudern mit oszillierender Schnecke und mit Scherstiften (Kneter der Fa. Buss). Mit diesen Verfahren werden im allgemeinen Gleichkorngranulate mit Korngrößen zwischen 2 und 5 min hergestellt. Die Granulate bestehen aus einem thermoplastischen Anteil, aufgebaut aus Copolymerisat P, und den darin eingelagerten Pigmenten oder Farbstoffen.
In einer weiteren Ausführungsform der Erfindung wird das Copolymerisat P in einem geeigneten Lösungsmittel gelöst und das Pigment in der resultierenden Lösung dispergiert (bzw. der Farbstoff in der Lösung gelöst). Dies kann beispielsweise mit Hilfe von Schüttelvorrichtungen oder einer Kugelmühle erfolgen. Das Lösungsmittel kann nach dem Mischprozeß direkt abgezogen werden oder die Mischung M aus Copolymerisat P und Pigment bzw. Farbstoff kann mit geeigneten Fällungsmitteln aus der Lösung gefällt werden, um die Mischungen M zu isolieren. Die Bereitung der Mischungen M mit Hilfe von Lösungsmitteln kommt insbesondere für hohe Pigment- oder Farbstoffkonzentration, im allgemeinen über 75 Gew.-%, in Betracht, da für diesen Fall die Pigment- oder Farbstoffteilchen mit Copolymerisat P überzogen separat vorliegen und das Copolymerisat P keine zusammenhängende Phase mehr bildet.

### Die Einarbeitung der Mischungen M in die Standardkunststoffe SK

Die Standardkunststoffe SK, in die die Mischung M aus Pigmenten oder Farbstoffen mit dem Copolymerisat P als universell wirkendes Dispergiermittel eingearbeitet werden, bilden mit dem Copolymerisat P verträgliche Mischungen, wie zuvor ausgeführt. Dies hat zur Folge, daß Mischungen SKMF aus transparenten Standardkunststoffen SK und Mischungen MF (Mischungen aus Copolymerisat P und Farbstoffen) ebenfalls transparent sind.
Die Mischungen SKMP aus Standardkunststoffen SK und Pigment-Dispergiermittel-Zubereitungen MP enthalten im allgemeinen 0,5 bis 80 Gew.-%, bevorzugt 1 bis 70 Gew.-%, besonders bevorzugt 2 bis 50 Gew.-% Mischung MP aus Copolymerisat P und Pigment und den zu 100 Gew.-% ergänzenden Anteil an SK. Zur Herstellung der Mischungen SKMP werden zunächst die im allgemeinen granulat- oder pulverförmigen Mischungen MP mit den im allgemeinen in Granulat- oder Pulverform vorliegenden Standardkunststoffen SK in langsam laufenden mechanischen Mischaggregaten mechanisch gemischt, ohne die Phasengrenzen aufzuheben (wie bei der Herstellung der Mischungen MP beschrieben). Die Vormischungen werden im allgemeinen in der Schmelze unter Verwendung von heizbaren Mischaggregaten bei den dafür geeigneten Temperaturen, beispielsweise zwischen 150 und 350 Grad C, in Knetern oder vorzugsweise in Extrudern, beispielsweise in Ein- oder Mehrschneckenextrudern, gemischt. Mit diesem Verfahren werden Mischungen SKMP im allgemeinen als Gleichkorngranulate mit Korngrößen zwischen 2 und 5 mm erhalten.
Die Mischungen SKMF aus Standardkunststoff SK und Farbstoff-Dispergator-Zubereitungen MF enthalten im allgemeinen 0,01 bis 40 Gew.-%, bevorzugt 0,05 bis 25 Gew.-%, besonders bevorzugt 0,1 bis 20 Gew.-% Mischung MF aus Copolymerisat P und Farbstoff und den zu 100 Gew.-% ergänzenden Anteil an SK. Im allgemeinen werden die Mischungen SKMF wie die Mischungen SKMP vorzugsweise durch Schmelzmischen hergestellt. Weisen die Farbstoffe allerdings eine hohe Flüchtigkeit auf und muß befürchtet werden, daß die Migrationsverluste bzw. Zersetzung des Farbstoffs unerwünschte Formen annimmt, dann werden die Mischungen SKMF durch Auflösen der Mischungskomponenten SK und MF im gemeinsamen Lösungsmittel und anschließendes Abziehen des Lösungsmittels bzw. Ausfällen der Mischung hergestellt.

### Vorteilhafte Wirkungen der Erfindung

Durch die universelle Verträglichkeit der erfindungsgemäßen Copolymerisate P mit den Standardkunststoffen SK können Pigmente und Farbstoffe in vielen Standardkunststoffen SK mit demselben Dispergiermittel P eingearbeitet werden. Dies ermöglicht die universelle Anwendbarkeit der Mischungen MP (Dispergator P und Pigment) und MF (Dispergator P und Farbstoff) in verschiedensten Kunststoffen SK, ohne den Dispergator P auf den Kunststoff abstimmen zu müssen.
Weiterhin ist mit Hilfe der Dispergiermittel P eine gleichmäßige Verteilung von Farbstoffen in transparenten Standard-Kunststoffen SK möglich, ohne deren Transparenz zu beeinträchtigen.
Die Dispergiermittel P können nach standardisierten Polymerisationsverfahren hergestellt werden, wobei die Monomerkomponenten der Copolymerisate P technisch leicht zugänglich sind.

Mit den Dispergiermitteln P können verschiedenste Pigmente und Farbstoffe in Standardkunststoffe SK eingearbeitet werden, womit mit einer bestimmten Copolymerisatzusammensetzung P verschiedenste Mischungen MP und MF hergestellt werden können, die gleichermaßen gut in die Standardkunststoffe SK eingearbeitet werden können.

Folgende Beispiele sollen die Erfindung erläutern.

### BEISPIELE

### Beispiele 1 - 8:

### Herstellung verschiedener universal verträglicher Pigmentbinder P

Zur Herstellung von 9 bzw. 10 kg Polymerisat P werden 5 kg Methylmethacrylat, 3,5 kg Cyclohexylmethacrylat, 0,5 kg Monomer (m3) und gegebenenfalls 1 kg Monomer (m4) mit 4 g tert.-Butylperneodecanoat, 15 g tert.-Butylperoctoat und 150 g 2-Mercaptoethanol unter Rühren gemischt, 15 Minuten entgast, danach in einen Beutel aus Polyesterfolie verfüllt, der zwischen den beiden Hälften einer entsprechend dimensionierten, mit Gummidichtlippen versehenen Blechkammer liegt, die anschließend verschlossen wird.
Die Polymerisation erfolgt in der im Wasserbad eingetauchten Kammer bei 50 Grad C und dauert 20 Stunden. Der nach dieser Polymerisationszeit feste Beutelinhalt wird der Kammer entnommen und zur Endpolymerisation 12 Stunden bei 110 Grad C im Temperschrank getempert. Das Polymerisat P wird danach in einer Mühle mit Siebgröße 8 gemahlen und kann entweder als Mahlgut oder nach anschließender entgasender Extrusion bei 150 Grad C als Granulat eingesetzt werden.

| Beisp. | Monomer (m3) | Monomer (m4) | J-Wert nach DIN 51562 (ml/g) |
|---|---|---|---|
| P 1 | 2-Dimethylaminoethylmethacrylat | ― | 23,3 |
| | | | |
| P 2 | 2-(4-Morpholinyl)ethylmethacrylat | ― | 26,4 |
| | | | |
| P 3 | 2-[2-(2-Ethoxyethoxy)ethoxy]ethylmethacrylat | ― | 27,4 |
| | | | |
| P 4 | N-(2-Methacryloyloxyethyl)ethylenharnstoff | ― | 25,8 |
| | | | |
| P 5 | 2-Dimethylaminoethylmethacrylat | Butylmethacrylat | 24,0 |
| | | | |
| P 6 | 2-(4-Morpholinyl)ethylmethacrylat | Butylmethacrylat | 25,4 |
| | | | |
| P 7 | 2-[2-(2-Ethoxyethoxy)ethoxy]ethylmethacrylat | Butylmethacrylat | 25,9 |
| | | | |
| P 8 | N-(2-Methacryloyloxyethyl)ethylenharnstoff | Butylmethacrylat | 26,2 |

### Vergleichsbeispiele 9 - 10:

### Herstellung von Pigmentbindern P' des Standes der Technik

Die Herstellung der Polymerisate erfolgt gemäß den Beispielen 1- 8:

| Beisp. | Zusammensetzung des Polymerisats | J-Wert nach DIN 51562 (ml/g) |
|---|---|---|
| P'9 | 95 Gew.-Teile Methylmethacrylat | 25,5 |
| | 5 Gew.-Teile 2-Dimethylaminoethylmethacrylat | |
| | | |
| P'10 | 95 Gew.-Teile Cyclohexylmethacrylat | 25,1 |
| | 5 Gew.-Teile 2-Dimethylaminoethylmethacrylat | |

### Beispiele 11 - 15:

### Herstellung von Mischungen MF aus Pigmentbindern P und molekular gelösten Farbstoffen:

Zu 1 kg des Pigmentbinders P bzw. P' gemäß den Beispielen 1 - 10 werden 10 g löslicher Farbstoff Thermoplastgelb ® 104 der Fa. BASF AG eingewogen und 5 Minuten in einem Taumelmischer gemischt. Die entstandene Trockenmischung wird anschließend bei 180 Grad C auf einem Einschnecken-Laborextruder der Fa. Storck extrudiert und stranggranuliert.

| Beispiel | Mischung | Mischungskomponenten |
|---|---|---|
| 11 | MF 5 | P 5 + Thermoplastgelb ® 104 |
| 12 | MF 6 | P 6 + " |
| 13 | MF 7 | P 7 + " |
| 14 | MF 8 | P 8 + " |
| 15 (Vergleich) | MF'9 | P'9 + " |
| 16 (Vergleich) | MF'10 | P'10 + " |

### Beispiele 17 - 22:

### Herstellung von Mischungen SKMF aus thermoplastischen Standardkunststoffen SK und Mischungen MF gemäß Beispielen 11 - 16:

Zur Herstellung von 1 kg eines eingefärbten Standardkunststoffs SKMF werden 50 g der Mischungen MF gemäß den Beispielen 11 - 15 mit 950 g Standardkunststoff SK im Taumelmischer gemischt und in einen Einschneckenextruder bei einer Schneckendrehzahl von 70 Upm extrudiert. Die Extrusionstemperaturen sind von der Art des Standardkunststoffs SK abhängig und im folgenden aufgeführt. Die Verträglichkeit wurde visuell am extrudierten Strang beurteilt. Verträglichkeit zwischen den Mischungskomponenten SK und MF besteht dann, wenn der extrudierte Strang transparent (+) ist, Unverträglichkeit dann, wenn der extrudierte Strang undurchsichtig gedeckt (-) ist.

Folgende Standardkunststoffe SK werden abgemischt:

| Abkürzung | Herkunft | Extrusionstemperatur (Grad C) |
|---|---|---|
| PP (Polypropylen) | Vestolen ® 7035 der Fa. HÜLS AG | 200 |
| | | |
| PS (Polystyrol) | Polystyrol ® 158K der Fa. BASF AG | 220 |
| | | |
| SAN (Styrol-Acrylnitril) | Luran ® 368 R der Fa. BASF AG | 230 |
| | | |
| PMMA (Polymethylmethacrylat) | Plexiglas ® Y8N der Fa. Röhm GmbH | 240 |
| | | |
| PC (Polycarbonat) | Makrolon ® 3100 der Fa. BAYER AG | 250 |
| | | |
| PVC (Polyvinylchlorid) | Vestolit ® M 6067 der Fa. Hüls AG | 180 |

| Beisp. | Mischung | Verträglichkeitsbeurteilung (transparent +, gedeckt -) | | | | | |
|---|---|---|---|---|---|---|---|
| | | PP | PS | SAN | PMMA | PC | PVC |
| 17 | SKMF5 = SK + MF5 | + | + | + | + | + | + |
| | | | | | | | |
| 18 | SKMF6 = SK + MF6 | + | + | + | + | + | + |
| | | | | | | | |
| 19 | SKMF7 = SK + MF7 | + | + | + | + | + | + |
| | | | | | | | |
| 20 | SKMF8 = SK + MF8 | + | + | + | + | + | + |
| | | | | | | | |
| 21 (Vergl) | SKMF'9 = SK+MF'9 | + | - | + | + | - | + |
| | | | | | | | |
| 22 (Vergl) | SKMF'10 = SK+MF'10 | + | + | - | - | - | + |

### Beispiele 23 - 31:

### Untersuchung der Verträglichkeit der Pigmentbinder P gemäß den Beispielen 1 bis 9 mit Polystyrol ® 158K der Fa. BASF

1 g Pigmentbinder P und 1 g Polystyrol ® 158 K (PS werden bei Raumtemperatur in 10 g 2-Butanon gelöst. Die Lösung wird in einer Petrischale ausgegossen und das Lösungsmittel bei 70 Grad C und einem Vakuum von 20 mbar vollständig abgezogen. Der resultierende Film der Polymermischung wird visuell beurteilt und auf einer Kofler-Heizbank auf seine

Entmischungstemperatur LCST untersucht [Temperatur bei Übergang klar (thermodynamisch verträgliche Mischung) → trübe (thermodynamisch unverträgliche Mischung)]

| Beispiel | Mischung | Filmbeurteilung | LCST (Grad C) |
|---|---|---|---|
| 23 | PS + P1 = 50/50 | klar | 205 |
| | | | |
| 24 | PS + P2 = 50/50 | klar | 205 |
| | | | |
| 25 | PS + P3 = 50/50 | klar | 210 |
| | | | |
| 26 | PS + P4 = 50/50 | klar | 150 |
| | | | |
| 27 | PS + P5 = 50/50 | klar | >240 |
| | | | |
| 28 | PS + P6 = 50/50 | klar | 215 |
| | | | |
| 29 | PS + P7 = 50/50 | klar | 210 |
| | | | |
| 30 | PS + P8 = 50/50 | klar | 165 |
| | | | |
| 31 (Vergl.) | PS + P'9 = 50/50 | trübe | <80 |

## Patentansprüche

1. Copolymerisat P als Dispergiermittel für Farbstoffe und/oder Pigmente in Standardkunststoffen SK, wobei P eine universelle Verträglichkeit mit den Standardkunststoffen SK aufweist,
dadurch gekennzeichnet,
daß das Copolymerisat P aufgebaut ist aus den Monomereinheiten
(m1) 30 bis 94,5 Gew.-% Methylmethacrylat,
(m2) 5 bis 50 Gew.-% (Meth)acrylat der Formel I: 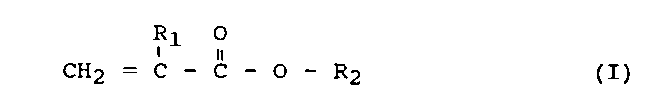 wobei:
R₁ für Wasserstoff oder Methyl und
R₂ für einen gegebenenfalls substituierten Cycloalkylrest mit 5 bis 7 Ringkohlenstoffatomen
stehen, sowie
(m3) 0,5 bis 20 Gew.-% (Meth)acrylverbindung der Formel II: 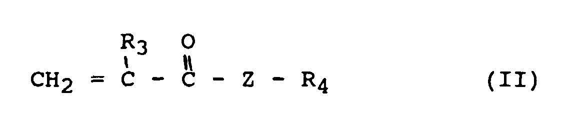 wobei:
R₃ für Wasserstoff oder Methyl,
R₄ für einen Substituenten, enthaltend mindestens ein Sauerstoff- und/oder ein Stickstoffatom und
Z für O, NH oder NR₅ mit R₅ = Alkyl mit 1 bis 6 Kohlenstoffatomen oder R₅ = R₄
stehen,
wobei sich die Monomereinheiten (m1), (m2) und (m3) zu 100 Gew.-% ergänzen.

2. Copolymerisat P gemäß Anspruch 1, dadurch gekennzeichnet, daß das Copolymerisat P neben den Monomereinheiten (m1), (m2) und (m3) noch eine Monomereinheit
(m4) 0,5 bis 30 Gew.-% Methacrylat der Formel III 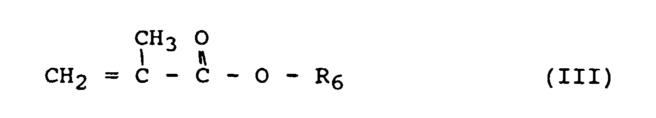 worin:
R₆ für einen gegebenenfalls verzweigten und/oder substituierten Alkylrest mit 3 bis 24 Kohlenstoffatomen
steht,
enthält, wobei sich die Monomereinheiten (m1), (m2), (m3) und (m4) zu 100 Gew.-% ergänzen.

3. Copolymerisat P gemäß den Ansprüchen 1 und 2, dadurch gekennzeichnet, daß die Monomereinheit (m3) aus der Gruppe, bestehend aus Dialkylaminoalkyl(meth)acrylate, Dialkylaminoalkyl(meth)acrylamide, Alkoxy(meth)acrylate sowie Alkyl(meth)acrylate und Alkyl(meth)acrylamide mit Heterocyclen, die mindestens ein Sauerstoffatom und/oder Stickstoffatom im Heterocyclus aufweisen, als Substituenten am Alkylester- oder Alkylamid-Rest, ausgewählt ist.

4. Copolymerisat P gemäß den Ansprüchen 1 bis 3, dadurch gekennzeichnet, daß das mittlere Molekulargewicht M_{w} von P zwischen 5 x 10³ und 5 x 10⁴ Dalton liegt.

5. Mischungen MP aus Copolymerisat P gemäß den Ansprüchen 1 bis 4 mit organischen oder anorganischen Pigmenten, dadurch gekennzeichnet, daß der Pigmentanteil zwischen 0,2 und 75 Gew.-%, bezogen auf die Mischung MP liegt.

6. Mischungen MF aus Copolymerisat P gemäß den Ansprüchen 1 bis 4, mit molekular gelösten Farbstoffen, dadurch gekennzeichnet, daß der Farbstoffanteil zwischen 0,1 und 25 Gew.-%, vorzugsweise zwischen 0,2 und 15 Gew.-% bezogen auf die Mischung MF liegt.

7. Mischungen SKMP aus Standardkunststoffen SK und Mischungen MP gemäß Anspruch 5, dadurch gekennzeichnet, daß der Anteil der Mischungen MP zwischen 0,5 und 80 Gew.-%, vorzugsweise zwischen 1 und 70 Gew.-% bezogen auf die Mischung SKMP liegt.

8. Mischungen SKMF aus Standardkunststoffen SK und Mischungen MF gemäß Anspruch 6, dadurch gekennzeichnet, daß der Anteil der Mischung MF zwischen 0,05 und 25 Gew.-%, vorzugsweise zwischen 0,1 und 20 Gew.-% bezogen auf die Mischung SKMF liegt.

9. Mischungen SKMP oder SKMF gemäß den Ansprüchen 7 und 8, dadurch gekennzeichnet, daß der Standardkunststoff SK ausgewählt ist aus der Gruppe Polymethylmethacrylat, Polystyrol, Poly-α-Methylstyrol, Copolymerisate enthaltend mindestens 50 Gew.-% Methylmethacrylat, Styrol oder α-Methylstyrol, Styrol-Acrylnitril-Copolymerisate, Acrylnitril-Butadien-Styrol-Terpolymerisate, Polyolefine, Polycarbonat, Polyestercarbonat, Polyvinylchlorid, Chlorkautschuk oder Polyvinylidenfluorid.

## Revendications

1. Copolymérisat P comme agent de dispersion pour colorants et/ou pour pigments dans des matières plastiques standard SK, dans lequel P manifeste une compatibilité universelle avec les matières plastiques standard SK,
caractérisé en ce que
le copolymérisat P est constitué des unités monomères,
(m1) 30 à 94,5 % en poids de méthacrylate de méthyle,
(m2) 5 à 50 % en poids de (méth)acrylate de formule I, 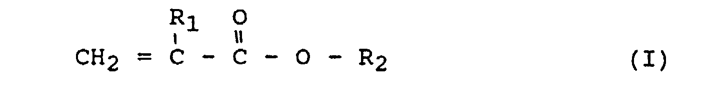 dans laquelle,
R₁ représente de l'hydrogène ou un méthyle
R₂ représente un radical cycloalkyle éventuellement substitué ayant de 5 à 7 atomes de carbone dans le cycle,
(m3) 0,5 à 20 % en poids d'un composé (méth)acrylique de formule II, 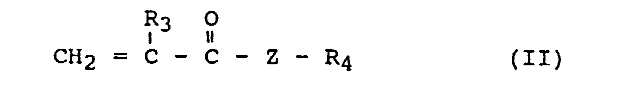 dans laquelle,
R³ représente de l'hydrogène ou un méthyle,
R⁴ représente un substituant qui contient au moins un atome d'oxygène et/ou un atome d'azote et,
Z représente O, NH ou NR₅ avec R₅ = alkyle ayant de 1 à 6 atomes de carbone ou R₅ = R₄,
dans lequel les unités de monomère (m1), (m2) et (m3) se complètent à 100 % en poids.

2. Copolymérisat P selon la revendication 1,
caractérisé en ce que
le copolymérisat P contient à côté des unités de monomère
(m1) (m2) et (m3) encore une unité de monomère,
(m4) de 0,5 à 30 % en poids de méthacrylate de formule III, 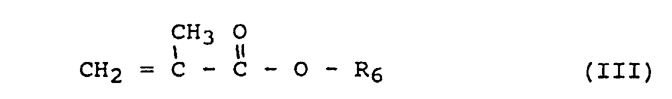
dans laquelle R₆ représente un radical alkyle éventuellement ramifié et/ou substitué ayant de 3 à 24 atomes de carbone, les unités de monomères (m1), (m2), (m3) et (m4) se complètant à 100 % en poids.

3. Copolymérisat P selon les revendications 1 et 2,
caractérisé en ce que
l'unité de monomère (m3) est choisie dans le groupe qui consiste en les (méth)acrylates de dialkylaminoalkyle, les dialkylaminoalkyl(méth)acrylamides, les alkoxy(méth)acrylates ainsi que les (méth)acrylates d'alkyle et les alkyl(méth)acrylamides, avec des hétérocycles qui possèdent au moins un atome d'oxygène et/ou un atome d'azote, comme substituant sur le radical ester d'alkyle ou alkylamide.

4. Copolymérisat P selon les revendications 1 à 3,
caractérisé en ce que
le poids moléculaire moyen M_{w} de P se situe entre 5x10³ et 5x10⁴ Dalton.

5. Mélanges MP à base de copolymérisat P selon les revendications 1 à 4 avec des pigments organiques ou minéraux,
caractérisés en ce que
la proportion de pigment se situe entre 0,2 et 75 % en poids rapporté au mélange MP.

6. Mélanges MP à base de copolymérisat P selon les revendications 1 à 4 avec des colorants dissouts à l'état moléculaire,
caractérisés en ce que
la proportion de colorant se situe entre 0,1 et 25 % en poids, de préférence entre 0,2 et 15 % en poids rapporté au mélange MF.

7. Mélanges SKMP à base de matières plastiques standard SK et de mélanges MP selon la revendication 5,
caractérisés en ce que
la proportion des mélanges MP se situe entre 0,5 et 80 % en poids, de préférence entre 1 et 70 % en poids, rapporté au mélange SKMP.

8. Mélanges SKMF à base de matières plastiques standard SK et de mélanges SF selon la revendication 6,
caractérisés en ce que
la proportion du mélange MF se situe entre 0,05 et 25 % en poids, de préférence entre 0,1 et 20 % en poids, rapporté au mélange SKMF.

9. Mélanges SKMP ou SKMF selon les revendications 7 et 8,
caractérisés en ce que
la matière plastique standard SK est choisie dans le groupe du polyméthacrylate de méthyle, du polystyrène, du poly α-méthylstyrène, des copolymérisats contenant au moins 50 % en poids de méthacrylate de méthyle, du styrène ou de l'α-méthylstyrène, des copolymérisats acrylonitrile-styrène, des terpolymérisats acrylonitrile-butadiène-styrène, des polyoléfines, du polycarbonate, des polyesters carbonate, du chlorure de polyvinyle, du caoutchouc chloré ou du fluorure de polyvinylidène.

## Claims

1. Copolymerisate P as a dispersant agent for dyestuffs and/or pigments in standard plastics SK, wherein P has a universal compatibility with the standard plastics SK, characterised in that the copolymerisate P comprises the monomer units
(m1) 30 to 94.5 wt % methylmethacrylate,
(m2) 5 to 50 wt % (meth)acrylate of formula I: 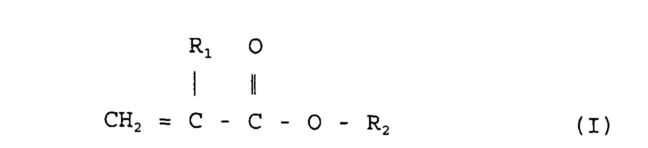 wherein:
R₁ denotes hydrogen or methyl and
R₂ denotes an optionally-substituted cycloalkyl group with 5 to 7 ring carbon atoms, and
(m3) 0.5 to 20 wt. % (meth)acrylic compounds of formula II: 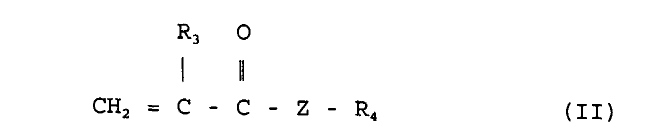 wherein:
R₃ denotes hydrogen or methyl,
R₄ denotes a substituent, containing at least one oxygen and/or nitrogen atom, and
Z denotes O, NH or NR₅ where R₅ = alkyl with 1 to 6 carbon atoms or R₅ = R₄,
wherein the monomer units (m1), (m2) and (m3) combine to form 100 wt. %.

2. A copolymerisate P according claim 1, characterised in that the copolymerisate P, apart from monomer units (m1), (m2) and (m3) also contains a monomer unit (m4) 0.5 to 30 wt. % methacrylate or Formula III 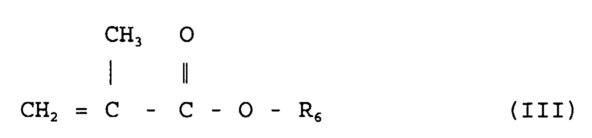 wherein:
R₆ denotes an optionally branched and/or substituted alkyl group with 3 to 24 carbon atoms,
wherein the monomer units (m1), (m2), (m3) and (m4) combine to form 100 wt. %.

3. A copolymerisate P according to claims 1 and 2, characterised in that the monomer unit (m3) is selected from the group comprising dialkylaminoalkyl(meth)-acrylates, dialkylaminoalkyl(meth)acrylamides, alkoxy(meth)acrylates and alkyl(meth)acrylates and alkyl(meth)acrylamides with heterocycles which have at least one oxygen atom and/or nitrogen atom in the heterocycle, as substituents on the alkylester or alkylamide group.

4. A copolymerisate P according to claims 1 to 3, characterised in that the mean molecular weight M_{w} of P is between 5 x 10³ and 5 x 10⁴ Daltons.

5. Mixtures MP of copolymerisate P according to claims 1 to 4 with organic or inorganic pigments, characterised in that the pigment proportion is between 0.2 and 75 wt. %, based on the mixture MP.

6. Mixtures MF of copolymerisate P according to claims 1 to 4, with molecular dissolved dyestuffs,
characterised in that the dyestuff proportion is between 0.1 and 25 wt. %, preferably between 0.2 and 15 wt. %, based on the mixture MF.

7. Mixtures SKMP of standard plastics SK and mixtures MP according to claim 5, characterised in that the proportion of mixtures MP is between 0.5 and 80 wt. %, preferably between 1 and 70 wt. %, based on the mixture SKMP.

8. Mixtures SKMF of standard plastics SK and mixtures MF according to claim 6, characterised in that the proportion of mixture MF is between 0.05 and 25 wt. %, preferably between 0.1 and 20 wt. %, based on the mixture SKMF.

9. Mixtures SKMP or SKMF according to claim 7 and 8, characterised in that the standard plastic SK is selected from the group polymethylmethacrylate, polystyrene, poly-a-methylstyrene, copolymerisates containing at least 50 wt. % methylmethacrylate, styrene or α-methylstyrene, styrene-acrylnitrile copolymerisates, acrylnitrile-butadiene-styrene-terpolymerisates, polyolefins, polycarbonate, polyestercarbonate, polyvinylchloride, chlorinated rubber or polyvinylidenefluoride.
